# EUROPEAN PATENT APPLICATION

(11) **EP 4 443 752 A1**
(43) Date of publication of application: **09.10.2024**
(21) Application number: 24163272.8
(22) Date of filing: 13.03.2024
(51) Int. Cl.: H04B 3/56, H04B 3/54

(54) **WIRED COMMUNICATION SYSTEM FOR REPLACING IN-VEHICLE CAN/LIN BUS**

(30) Priority: 15.03.2023 TW 112109611; 08.05.2023 TW 112117025; 06.06.2023 TW 112121140
(71) Applicant: Hangzhou Lianxintong Semiconductor Co., Ltd., Hangzhou City Zhejiang (CN)
(72) Inventor: LI, HSIN-HSIEN, 302 Zhubei City (TW)
(74) Representative: Lang, Christian

(57) **Abstract**

A wired communication system for replacing an in-vehicle CAN/LIN bus has a power line or a transmission line coupled to multiple communication units, and includes a main control communication unit. In a first time domain, each of the communication units has a transmission frequency band which is dedicated, the transmission frequency bands of the communication units do not overlap with one another, and the transmission frequency bands of the communication units also do not overlap with a transmission frequency band or a transmission time of the main control communication unit. All of the transmission frequency bands can be combined into a complete OFDM frequency band, and there is no guard band between the transmission frequency bands.

## Description

### FIELD OF THE INVENTION

This disclosure relates to a new wired communication system to replace the architecture mainly based on a CAN/LIN bus in a vehicle, to decrease the cost and improve the practicability of automated production. The associated method may also be applied to wired communication applications such as an in-vehicle power line, a twisted pair, a coaxial cable and the like.

### DESCRIPTION OF RELATED ART

At present, most types of in-vehicle Internet of things (ITO) have the layouts, including a controller area network (CAN), a local interconnect network (LIN) and the like, working in conjunction with other terminal control lines to achieve the full vehicle monitor and communication. These wiring harnesses have the high material cost, increase the weight of the vehicle, decrease the effective space in the vehicle, and cannot be easily adapted to the automation assembling and on-line upgrading. So, if the in-vehicle power line or the fewer wiring harnesses can be used as the in-vehicle transmission line functioning to achieve the in-vehicle communication, then it is possible to advantageously decrease the cost, decrease the overall weight of the system, increase the effective space in the vehicle, upgrade the automotive software easily, and facilitate the automated production.

Regarding existing power line communication (PLC) protocols, such as Generation 3rd PLC (G3-PLC), High Speed PLC (HPLC) or Homplug AV/GreenPhy communication modes, transmission is performed using fixed frequency bands, wherein only one of communication units on the same transmission line is allowed to transmit the signal onto the transmission line at the same time instant, or otherwise the so-called signal "collision" occurs to cause signal errors and the signal needs to be transmitted again. In other words, the existing PLC communication mode cannot guarantee that the signal transmission certainly succeeds at one time, and the existing PLC communication mode has the possibility of error occurrence, and cannot guarantee the time of successfully completing the transmission. Because the in-vehicle communication usually requires the real-time property and the reliability, the existing PLC communication protocol is less applicable to the replacement of the reliable CAN/LIN for completing the transmission.

In order to avoid the collision, a frequency-division multiplexing (FDM) method is previously and frequently used to divide the used frequency band into several frequency bands. In order to prevent the signals in different frequency bands from mutual interference, a certain guard band is reserved between the frequency bands in order to avoid the interference between the adjacent frequency bands and ensure the isolation between the frequency bands. However, such the configuration needs to discard some frequency bands functioning as the guard bands. When the frequency band needs to be further divided into more frequency bands, the ratio of the discarded frequency bands becomes unignorable, and the full use of precious and limited communication frequency bands cannot be achieved. In addition, in order to achieve the better receiving effect, various analog and digital filters are added to the hardware design of the communication unit of each frequency band, thereby increasing the system cost and power consumption.

### SUMMARY OF THE INVENTION

In order to guarantee that each in-vehicle communication unit has the sufficient bandwidth, a fixed used frequency band may be configured for each communication unit. Compared with the common FDM device, an embodiment of this disclosure can divide the frequency band without the needs of the guard band and the additional filter, and the embodiment of this disclosure is also different from the common FDM device, which only demodulates its own dedicated frequency band upon demodulation. Instead, the embodiment of this disclosure demodulates the frequency bands used by all the communication units, and the packet lengths outputted from all the communication units are the same. This disclosure proposes a wired communication system for replacing an in-vehicle CAN/LIN bus. The wired communication system has a power line or a transmission line coupled to multiple communication units. In one embodiment, wires such as a twisted pair, a coaxial cable and the like may also be used to replace the power line in order to obtain the better communication quality. The wired communication system includes a main control communication unit for performing a time delay or attenuation value calibration on the communication units and completing clock calibration. The main control communication unit and the communication units perform time synchronization. The main control communication unit allocates multiple transmission frequency bands used by the communication units, and adjusts transmission energies of the communication units, so that attenuations of the transmission energies of the communication units corresponding to the transmission frequency bands obtain proper or corresponding compensations. In some cases, compensations of attenuation amounts may also be completed by way of receiving terminal compensations.

In an embodiment of this disclosure, the main control communication unit allocates the communication units, so that the communication units have an uplink time or a downlink time corresponding to the transmission frequency bands.

In an embodiment of this disclosure, when the time delay and the attenuation value are greater than a threshold value, after the main control communication unit has allocated the uplink time of the communication units corresponding to the transmission frequency band, the communication units concurrently transmit the one packet to the main control communication unit, and the main control communication unit forwards the packet to the target communication units. At this time, the main control communication unit coordinates the transmitting time of each communication unit and calibrates the clock, so that the packet synchronization when the packets of each of the communication units are transmitted to the main control communication unit is improved, or the better demodulation effects are obtained through the receiving terminal of the system for correcting the individual frequency band angle.

In an embodiment of this disclosure, the main control communication unit makes the communication units compensate for the signal energy thereof in advance before transmitting the packet according to positions of the communication units on the power line, or the attenuation value of the signal, so that signal energy levels in all of the transmission frequency bands are substantially the same when the target communication units receive the packet. In addition, the receiving terminal in the system may also complete partial or full compensation to demodulate the correct signal contents.

In an embodiment of this disclosure, there are fewer sub-carriers of the orthogonal frequency-division multiplexing (hereinafter referred to as OFDM) that can be transceived, or there are fewer bits that can be carried in each frequency bin in some communication units for the cost-down consideration. The main control communication unit is configured such that the overall system has different communication units that can be used in a mixed manner to decrease the overall system cost.

### BRIEF DESCRIPTION OF DRAWINGS

FIG. 1 is a schematic view showing a transmission line (non-power line) according to an embodiment of this disclosure.
FIG. 2 is a schematic view showing an initial startup of a wired communication system 100 of this disclosure.
FIG. 3 shows frequency bands allocated in the overall communication frequency band in an OFDM embodiment having 64 sub-carriers communication units 201 to 2016, wherein each of the frequency bands has four sub-carriers.
FIG. 4A shows a wired communication system 400A of this disclosure for replacing an in-vehicle CAN/LIN bus.
FIG. 4B shows a wired communication system 400B of this disclosure for replacing an in-vehicle CAN/LIN bus.
FIG. 4C is a schematic view showing an active isolator 403.
FIG. 5 shows an embodiment of a transceiver circuit of a communication unit 20N.
FIGS. 6 and 7 show an embodiment of this disclosure.

### DETAILED DESCRIPTION OF THE INVENTION

This disclosure proposes several architectures that can be used in the in-vehicle wired communication, in which the wires such as the twisted pair or the coaxial cable is also applicable, and the wires do not play the role of supplying the power, are not connected to the battery, and are purely used in the communication. The architecture is applicable to the transmission line application having the short distance, the lower noise and the smaller online impedance variation.

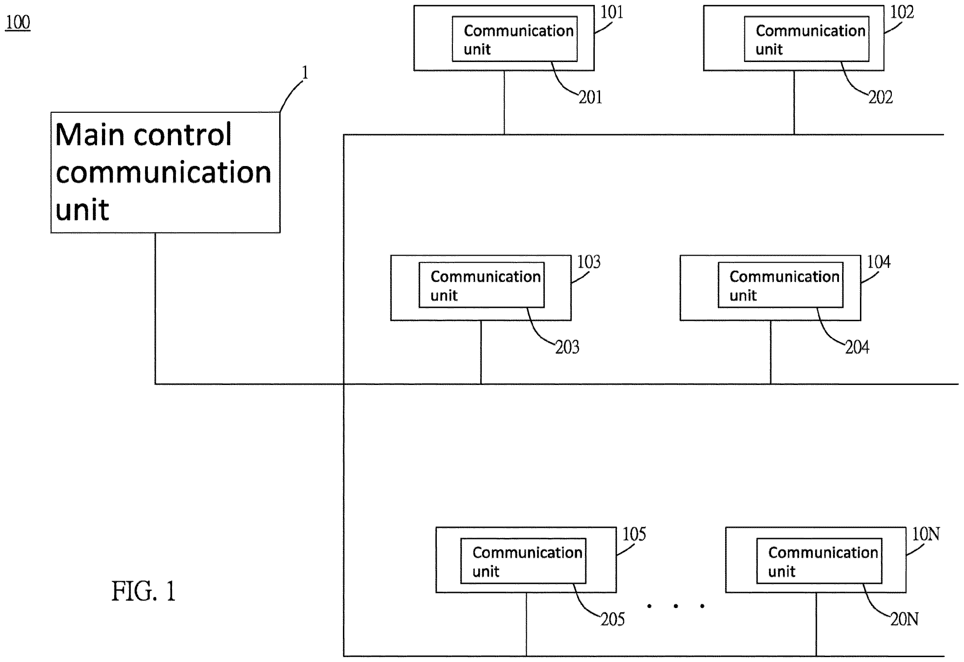

FIG. 1 is a schematic view showing an embodiment of this disclosure. Referring to FIG. 1, a wired communication system 100 of this disclosure for replacing an in-vehicle CAN/LIN bus includes a main control communication unit 1 and multiple application modules 101 to 10N, which have corresponding communication units 201 to 20N, respectively. The wired communication system 100 has a transmission line coupled to the communication units 201 to 20N. The wired communication system 100 is a non-PLC system.

In order to avoid the signal "collision" in this disclosure, the frequency bands that can be transmitted by the communication units 201 to 20N are different from one another. In one embodiment, the communication units 201 to 20N are allocated with different transmission frequency bands B1 to BN, so that the signal collision problem is not present in this disclosure.

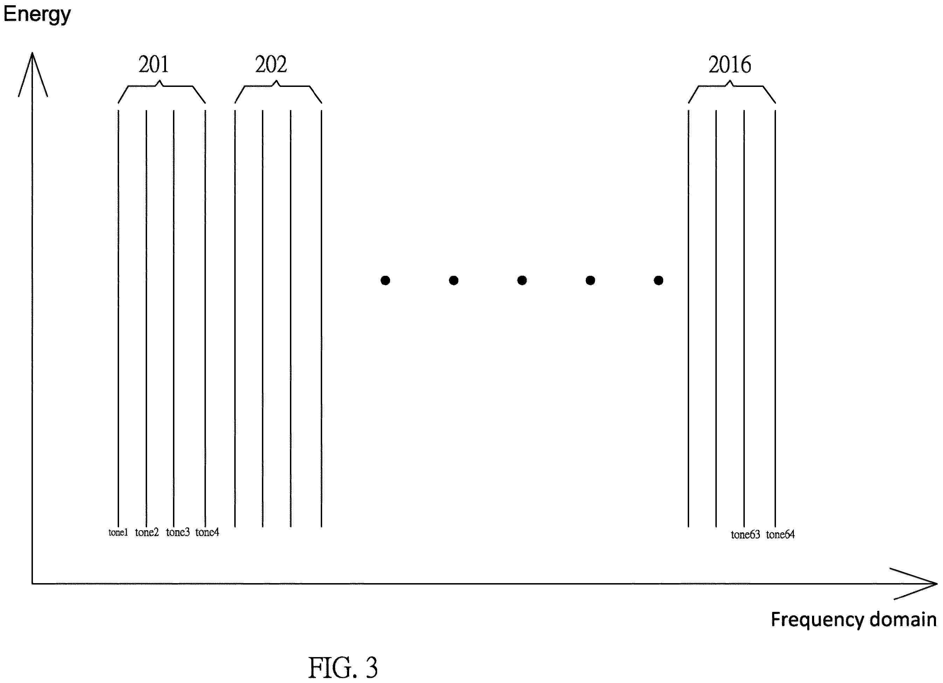

In one embodiment, if the length of the power line or the transmission line is smaller than the wavelength of the frequency band of the transmission signal in the wired communication system 100 in a first time domain, then the system may be regarded as the same OFDM system when the attenuation degrees and the time delays of the signals received at arbitrary positions of the power line or the transmission line approach each other (e.g., the variation is smaller than a threshold value). However, the frequency bands that can be transmitted by the communication units are constituted by some specific sub-carriers that are not repeated, and the system only needs to synchronize times and packet lengths of the signals transmitted by the communication units, so that the communication units can concurrently transmit the signals to the individual dedicated frequency bands, and also receive signals outputted from all the communication units and perform packet demodulation at the same time. That is, there is no overlap present between the transmission frequency bands of the communication units, no overlap is present between the transmission frequency bands of the communication units and the transmission frequency band of the main control communication unit, and no overlap is present between transmission times between the communication units and a transmission time of the main control communication unit. All of the transmission frequency bands can be combined into a complete OFDM frequency band, and there is no guard band between the transmission frequency bands. In such the system, because each communication module can demodulate transmission contents of other communication units, the communication mode thereof is a "many-to-many" mode. As long as the transmission object of the message is specified in the transmission content, the receiver can realize that the message is to be transmitted to itself and perform the corresponding processing. In addition, because all messages are demodulated, any communication unit also realizes the message contents to be exchanged between other communication units. For a highly intelligent self-driving system in the future, this characteristic of using such the message transmission method is very efficient, and any operation unit can dominate the messages of other sensors in a real-time manner or realize the reactions performed by other operation units. Illustrations will be described with reference to a following simple example. In the example of an OFDM system having 64 sub-carriers, as shown in FIG. 3, there are sixteen communication units 201 to 2016 capable of messaging one another on a same power line. Each communication unit is allocated with a dedicated frequency band with four sub-carriers for transmitting the signal. In this manner, each communication unit can output the signal to other communication units through its own dedicated frequency band. In one example to be explained, the communication units 201, 205, 2010 and 2016 output the packets within a specific packet time, and the communication unit 208 is the transmission target of the communication units 201 and 205. The communication unit 2010 transmits the packet to the communication unit 2016, and the communication unit 2016 broadcasts the packet to all the other communication units. After all the communication units have received and demodulated the packets, the communication unit 208 receives the packets coming from the communication units 201 and 205, and the communication unit 2016 receives the message from the communication unit 2010. In addition, all the communication units 201 to 2015 receive the packet(s) from the communication unit 2016. Because each communication unit demodulates all the packets outputted onto the power line, each communication unit may also realize all the packets therebetween. In this case, the main control communication unit may be any one of the communication units 201 to 2016, the communication unit is in charge of coordinating the communication start, and each of the communication units 201 to 2016 can synchronously transmit and receive signals in the communication process.

In order to keep the high overall transmission rate on the power line, each of the communication units 201 to 20N can transmit and receive signals concurrently. However, in order to prevent the signals outputted from different communication units 201 to 20N from becoming noise of other communication units 201 to 20N, the starting time and the ending time of transmitting the packet by each of the communication units 201 to 20N needs to be synchronized upon demodulation at the receiving terminal, so that the correct packet can be demodulated. That is, the system of this disclosure needs to have the synchronization process after booting up, and needs to hold this synchronization and continuously perform the proper fine tuning to compensate the influence of external factors, such as the temperature humidity and the like, upon the normal operation. In other words, the main control communication unit needs to keep all the communication units continuously synchronizing with the clock itself, and the main control communication unit and the communication units concurrently output the packets having the same length, so that all signals are always kept at the states that can be demodulated by each communication unit and the main control communication unit.

If the length of the transmission line is not very short as compared with the wavelength of the communication frequency band, then the signals outputted from different communication units are received by the communication units at different times, between which the time delays cannot be ignored. Therefore, each communication unit cannot correctly demodulate all the OFDM signals. Because different times of arrival of the signals may cause the signal be distorted or interfered, the demodulation result is affected. In this case, only the second transmission mode can be adopted. In this mode, all the communication units only perform the delay and attenuation calibration with respect to the main control communication unit, and the communication units still have the dedicated transmission frequency bands, respectively, and also synchronously transmit the signals according to the calibrated time differences. However, the main control communication unit is the object to which all the communication units transmit the messages. That is, the "one-to-many" communication mode is entered. In this case, the communication unit farther from the main control communication unit starts to transmit the packet earlier, and the communication unit closer to the main control communication unit starts to transmit the packet later. After calibration, the OFDM signals received by the main control communication unit are as if all the transmission frequency bands are concurrently outputted from a certain communication unit, and the demodulation can be performed smoothly. In other words, the main control communication unit adjusts the transmitting terminals of all the communication units in the system to perform the time delay calibration, so that all the packets, which are outputted from the communication units and reach the main control communication unit, can be combined into a complete OFDM signal. The message transmission becomes that the communication units transmit signals to the main control communication unit in one period of time, and that the main control communication unit transmits messages to all the communication units in another period of time. That is, the signals between the communication units are differentiated in a FDM manner, and the signals between each of the communication units and the main control communication unit are differentiated in a time-division multiplexing (TDM) manner to prevent collision. If the communication unit 201 wants to transmit the message to the communication unit 202, then the communication unit 201 needs to firstly transmit the message to the main control communication unit 1, and then the main control communication unit 1 further transmits the message to the communication unit 202 in the following message transmitting time interval. In the further explanation, the main control communication unit 1 performs a time delay or attenuation value calibration on the communication units 201 to 20N, so that all the communication units 201 to 20N are time-synchronized; the main control communication unit 1 also allocates the transmission frequency bands used by the communication units 201 to 20N; and the main control communication unit 1 adjusts the transmission energies of the communication units 201 to 20N so that energy values of the transmission energies of the communication units 201 to 20N have been calibrated when the corresponding transmission frequency bands B1 to BN reach the main control communication unit 1; or the receiving terminal in the system performs the self compensation so that the messages of all the communication units 201 to 20N can be demodulated smoothly. When the main control communication unit 1 transmits the signal, all the communication units 201 to 20N are in a receiving mode. At this time, the communication units 201 to 20N do not transmit signals, so the main control communication unit 1 can output the signal in the full frequency band, and all the communication units 201 to 20N can demodulate all the messages outputted from the main control communication unit 1. So, the vehicle message sharing has the advantage, and the corresponding reaction can be made earlier.

In one embodiment, the main control communication unit 1 allocates the communication units 201 to 20N, so that the communication units 201 to 20N have an uplink time of the transmission frequency bands B1 to BN for transmitting a packet.

After the main control communication unit 1 has allocated the uplink time of the communication units 201 to 20N corresponding to the transmission frequency bands B1 to BN, the communication units 201 to 20N concurrently transmit packets to the main control communication unit 1, which allocates the downlink time, and transmits the packets to the communication units 201 to 20N at the downlink time. That is, after the main control communication unit has allocated the uplink time of the communication units corresponding to the transmission frequency bands, the communication units 201 to 20N concurrently transmit their individual packets to the main control communication unit 1 at the uplink time, the main control communication unit 1 demodulates the packets, outputted from all the communication units 201 to 20N, into a complete OFDM signal, and the main control communication unit 1 transmits the packets to the communication units 201 to 20N at the downlink time. In addition, when the main control communication unit 1 is transmitting the packet, the communication units 201 to 20N is in a receiving state; and when the communication units 201 to 20N are transmitting the packets, the main control communication unit 1 is in the receiving state.

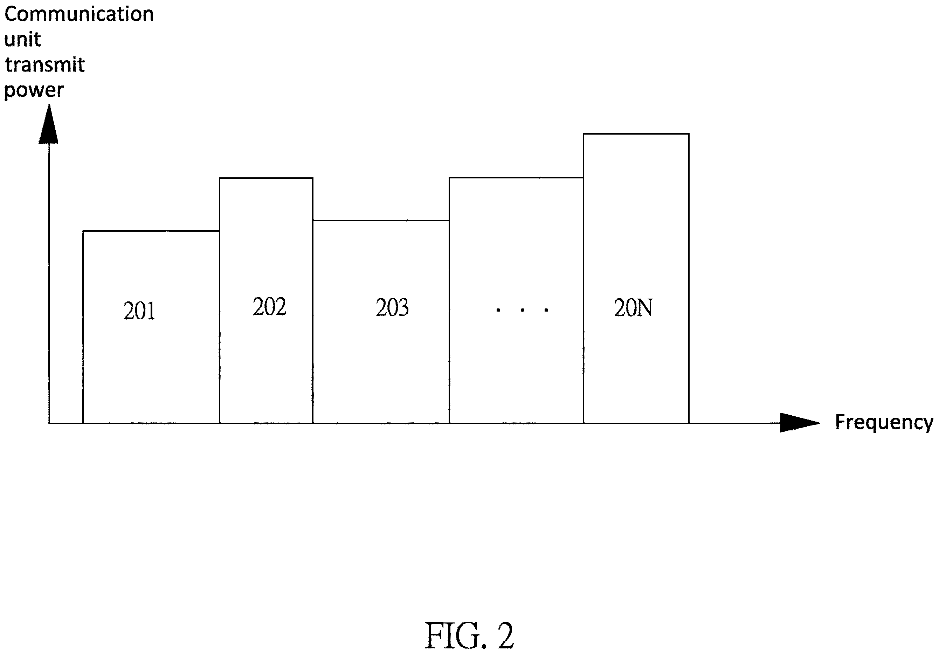

In addition, after the initial startup of the wired communication system 100, the main control communication unit 1 adjusts the time delay and attenuation calibration of each of the communication units, so that the signals in all the transmission frequency bands B1 to BN can concurrently reach the main control communication unit with the unit energy levels being substantially the same. FIG. 2 is a schematic view showing the initial startup of the wired communication system 100 of this disclosure. Referring also to FIG. 2, the communication units 201 to 20N have different frequency bands and transmit different powers at this time. Also, because the positions of the communication units 201 to 20N are different from one another, the attenuation amounts are also different from one another, and the main control communication unit 1 makes each of the communication units 201 to 20N perform energy compensation in advance, so that the energy levels of all the communication frequency bands are consistent when the receiving terminal of the system receives the signals. Referring also to FIG. 3 concurrently, it is assumed that there are sixteen communication units 201 to 2016 that can message one another on the same power line, and each communication unit is allocated with a dedicated frequency band of four sub-carriers for transmitting the signal. FIG. 3 shows the communication unit 20N having the consistent energy level in the overall communication frequency band. In one embodiment, the attenuation calibration may also be compensated by the receiving terminal of the main control communication unit 1.

In the actual application, the above-mentioned concept can be extended to other complex or hybrid modes. For example, in order to use the communication channel more effectively, multiple communication units may use the same frequency band in a time-division manner in some application modules (e.g., light dimming or car window lift control) which are less sensitive to the time delay. Consequently, a larger bandwidth may be reserved and used by the communication unit having the big data amount or the high immediate requirement in the system. In addition, in order to make the specific high-speed and low-speed applications run at a lower cost, it is assumed that the wired communication system 100 is in a second time domain. At this time, in addition to the main control communication unit in the system, other communication units may perform communications using the full frequency band (or the whole transmission frequency band). For example, each camera transmits the image in a TDM manner by allocating the time to let the data be transmitted back to the main control communication unit, and the OFDM modulation and demodulation abilities of the low bandwidth communication unit connected to the lamp control or car window control can be downgraded. That is, the OFDM signal processing accuracy and efficiency of the low bandwidth communication unit can be decreased to reduce the cost of the overall system. In one embodiment, there are 256 sub-carriers of OFDM that can be modulated and demodulated by the main control communication unit, and each sub-carrier supports 1,024 quadrature amplitude modulations (referred to as QAM). That is, 1,024 different discrete states can be transmitted in each signal cycle, and the system is connected to 4 full-band high-speed communication units and 128 low-speed communication units. Each low-speed communication unit only can modulate and demodulate continuous 16 sub-carriers, and each sub-carrier can resolve only 64 QAM. In this case, the main control communication unit can configure: a first packet time for the transmission of the main control communication unit; second to fifth packet times for 4 high-speed communication units to perform alternate transmission (256 sub-carriers can be outputted, and each sub-carrier can solve 1,024 QAM); a sixth packet time allocated to 16 low-speed communication units each being specified to use continuous 16 sub-carriers without repetition; and analogically seventh to thirteenth packet times specified to be used by 16 low-speed communication units without repetition. That is, 128 low-speed communication units are allocated to finish the message transmission once alternately in 8 packet times, and then it turns to the main control communication unit that transmits the message, and the processes are repeated in such a manner. That is, in each signal cycle, the packet time of the low-speed communication unit is interspersed in the packet times used by the main control communication unit and the high-speed communication unit, and each communication unit has its own dedicated and fixed transmission frequency band and message amount. Based on such the system, because the sub-carrier modulation ability of the low-speed communication unit is equal to only 64 QAM, the requirement on the signal-to-noise ratio (SNR) of the transmitted signal is lower, which means that the reliability is higher. However, its demodulation ability is equal to only 16 sub-carriers. So, when the main control communication unit needs to transmit the message to the low-speed communication unit, the message needs to be placed in its configured sub-carrier and 8 bits of the most significant bit (MSB). The message to be transmitted from the main control communication unit to the high-speed communication unit is not restricted.

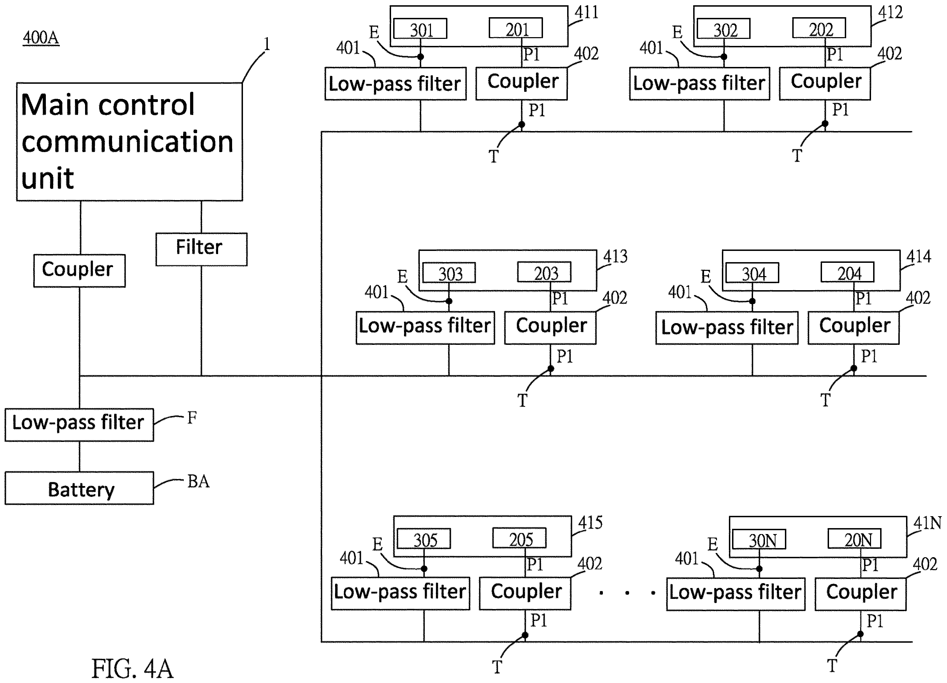

When this disclosure is applied to the in-vehicle communication, better dedicated wires, such as twisted pairs or coaxial cables, can be used as its communication wires to improve the communication quality. In order to decrease the cost, however, regarding the power line connected to the battery and used to power each in-vehicle application module 41N, a low-pass filter 401 and a coupler 402 for bypassing the low-pass filter 401 and transmitting the signal to the trunk power line need to be connected to each of the communication units 201 to 20N in order to guarantee the communication quality. FIG. 4A is a schematic view showing a wired communication system 400A for replacing an in-vehicle CAN/LIN bus according to an embodiment of this disclosure. Referring to FIG. 4A, a low-pass filter F also needs to be connected between the battery BA and the power line. The main objective thereof is to guarantee that the higher attenuation of the signal cannot be caused in the communication frequency band signal due to the low impedance of the battery BA and the power consumption unit, and to block the noise, generated by the power consumption unit, from entering the trunk power line. The wired communication system 400A is a system, in which the power line is used.

In addition, the ground wire of the vehicle is generally replaced by the car shell, the DC electricity is generally supplied from the power cable (line) to each application module, and then the DC electricity flows back to the battery from the car-shell ground wire nearby. If the network signal is also transmitted in the same loop, then the signal tends to radiate, and the external interference noise is also absorbed by the transmission line. So, it is more proper that the differential signal is transmitted using the cable such as the twist pair. That is, the DC current loop still inherits from the original car shell loop, but the network signal flows back through the twisted-pair loop. At this time, the differential signal transmission line can be used to serve as the same set of DC power cables or two sets of power cables (e.g., one cable of 3.3V, and the other cable of 24V), and the requirement on the power chip on each application module can be properly reduced.

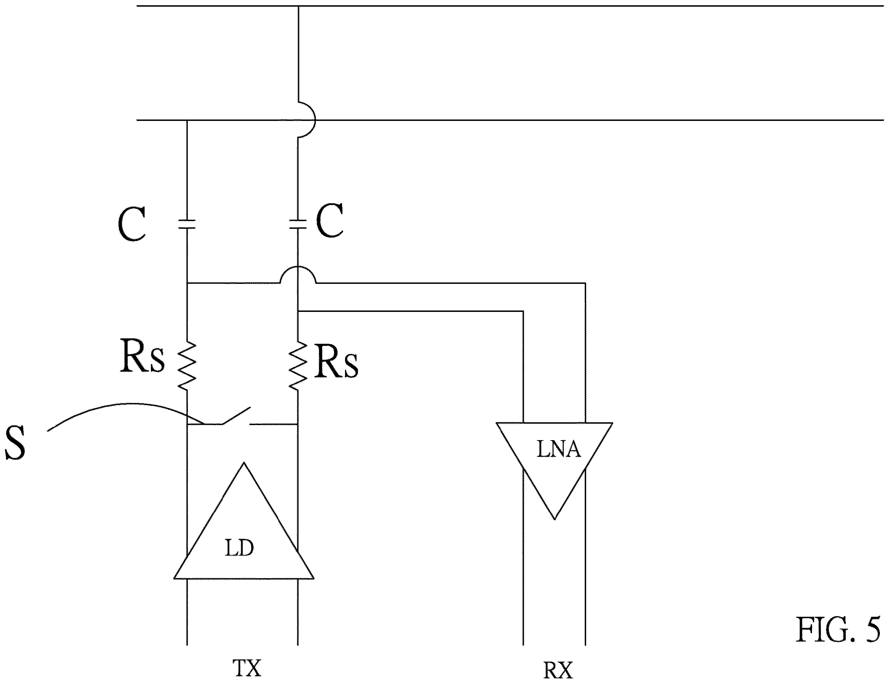

Regarding the coupler in the power line embodiment, the resistor serially connected to the capacitor or the transformer is usually adopted to isolate the voltage on the power line, and to transmit and receive the full channel message, as shown in FIG. 5.

As previously mentioned, each of the application modules 411 to 41N of the wired communication system (power line) 400A includes power consumption units 301 to 30N and communication units 201 to 20N corresponding thereto. That is, the main control communication unit 1 of the vehicle transmits the power energy wave and network signal through the automotive power line. The low-pass filter 401 is disposed at the entrance of each of all or some of power consumption terminals E of the application modules 411 to 41N, and filters the network signal, so that the power energy wave enters the power consumption units 301 to 30N of the application modules 411 to 41N. The coupler 402 generates a coupling path P1 for bypassing the network signal without passing through the low-pass filter 401, and the network signal enters the transmission terminal T through the first coupler 402 via the coupling path P1. That is, the network signal enters the communication units 201 to 20N of the application modules 411 to 41N through the coupling path P1 generated by the coupler 402. The power consumption units 301 to 30N are power supply units corresponding to the communication units.

Please note that the low-pass filter 401 is disposed at the entrance of each of all or some of the power consumption terminals E of the wired communication system 400A. The low-pass filter 401 separates the power line into the power consumption terminal E and the transmission terminal T, wherein the power line impedance at the side of the transmission terminal T is not affected by that at the side of the power consumption terminal E.

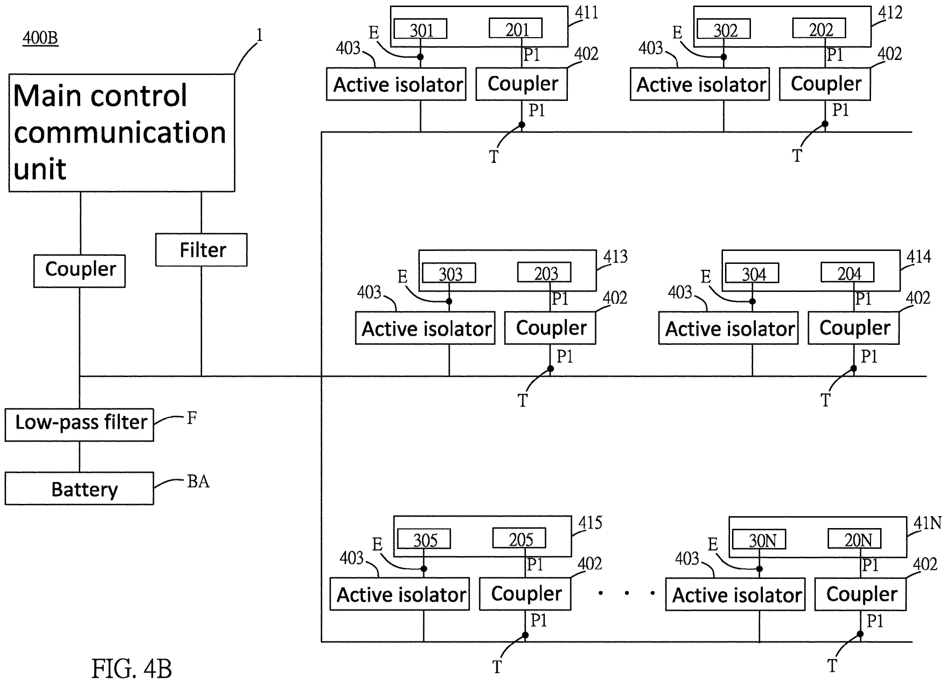

FIG. 4B is a schematic view showing a wired communication system 400B of an embodiment of this disclosure for replacing an in-vehicle CAN/LIN bus. Referring to FIG. 4B, the wired communication system 400B is different from the wired communication system 400A in that the low-pass filter may be replaced with an active isolator 403 in this embodiment to reduce the requirement on the transformer or inductance value. In other words, the active isolator 403 is disposed at the entrance of each of all or some of the power consumption terminals E of the wired communication system. The active isolator 403 separates the power line into the power consumption terminal E and the transmission terminal T, and filters the network signal so that the power energy wave enters the power consumption terminal E, wherein other principles are the same as those mentioned hereinabove.

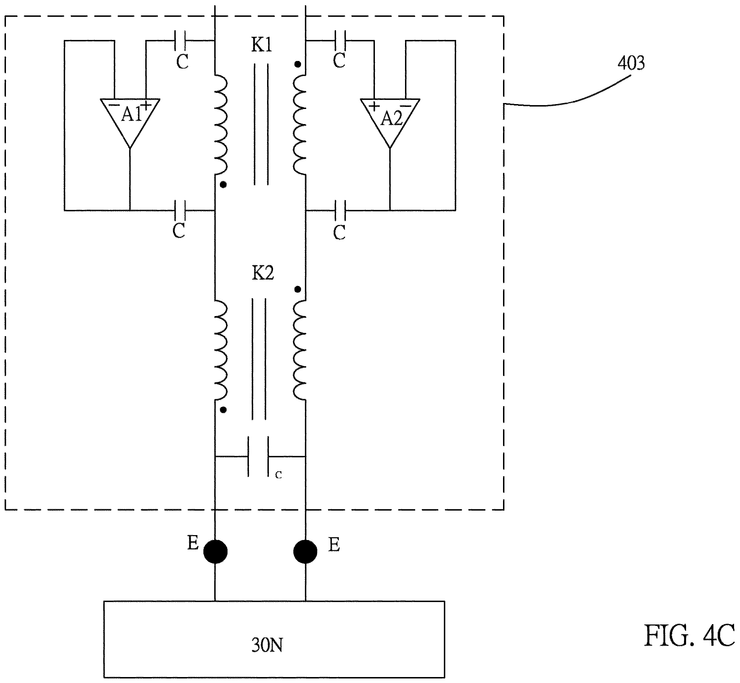

FIG. 4C is a schematic view showing the active isolator 403 of an embodiment. Referring concurrently to FIG. 4C, the isolator of this embodiment includes two transformers K1 and K2 respectively serially connected to the power line; and two amplifiers A1 and A2 respectively coupled to the starting terminal of the primary-side coil and the starting terminal of the secondary-side coil of the transformer K1, wherein the output terminal of the amplifier A1 is coupled to the inverting input terminal of the amplifier A1, the output terminal of the amplifier A2 is coupled to the inverting input terminal of the amplifier A2, and the output terminals of the amplifiers A1 and A2 are coupled between the two transformers K1 and K2. The noninverting input terminals of the amplifiers A1 and A2 are respectively coupled to the starting terminal of the primary-side coil and the starting terminal of the secondary-side coil of the transformer K1. The power line at the high-voltage side is parallelly connected to a high-voltage capacitor C. That is, the high-voltage capacitor C is parallelly connected between the ending terminal of the primary-side coil and the ending terminal of the secondary-side coil of the transformer K2, and the power line. The capacitors Care parallelly connected between the starting terminal of the primary-side coil and the starting terminal of the secondary-side coil of the transformer K1, the noninverting input terminals of the amplifiers A1 and A2 and the power line, and parallelly connected between the ending terminal of the primary-side coil and the ending terminal of the secondary-side coil of the transformer K1, the inverting input terminals and the output terminals of the amplifiers A1 and A2 and the power line.

In addition, either the power line or the better independent transmission line is used as the in-vehicle transmission line, the impedance of the transceiver should be consistent, and the specific architecture is needed, as shown in FIG. 5 depicting an example of the transceiver circuit of the communication units 201 to 20N. In this embodiment, each of the communication units 201 to 20N includes two capacitors C; and two matching resistors Rs functioning as impedance matching and being respectively serially connected to the capacitors C. A line driver LD is disposed between the transmitting terminal Tx of the communication unit and the matching resistors Rs, and a low-noise amplifier LNA is disposed between the receiving terminal Rx of the communication unit, the capacitors C and the matching resistors Rs. The matching resistors RS function as impedance matching and are respectively serially connected to the capacitors C, and the transmitting terminal Tx is parallelly connected to a switch S. When the transmitting terminal Tx is transmitting the signal, this switch S is OFF. When the transmitting terminal Tx does not transmit the signal, this switch S is ON. If N communication units are connected onto the power line, then the low frequency impedance of the transmission line is far less than that of the matching resistor, and the wavelength of the transmission frequency band is much longer than the length of the transmission line, then the signal is attenuated into 1/(N+1) times of the original level after the signal, outputted from the line driver LD on each of the communication units, has been transmitted onto the transmission line. If there are 99 communication units disposed on the power line, then the signal received by the receiving terminal Rx is equal to (1/100) times of the superimposed signal of the signals outputted from all the communication units. That corresponds to the 40dB attenuation.

In addition, because the ground wire of the vehicle is typically replaced with the car shell, the DC electricity is generally supplied from the power cable (line) to each application module, and then flows back to the battery from the car-shell ground wire nearby. If the network signal also runs along the same loop, then the signal is easily radiated, and the external interference noise is also easily absorbed by the transmission line. So, it is proper that the differential signal is transmitted using the cable such as twist pairs. That is, the DC current loop follows the original car shell loop, but the network signal flows back through the twisted-pair loop. At this time, the differential signal transmission line can be used to serve as the same set of DC power cables or two sets of power cables (e.g., one cable of 3.3V, and the other cable of 24V), and the requirement on the power chip on each application module can be properly reduced.

When some communication units have the lower requirements on the immediacy and rate (or speed), multiple communication units using the same frequency band may be hung on the same power line. At this time, a more complex anti-collision mechanism is required. For example, different communication units using the same frequency band are restricted to transmit the signals only in specific time periods.

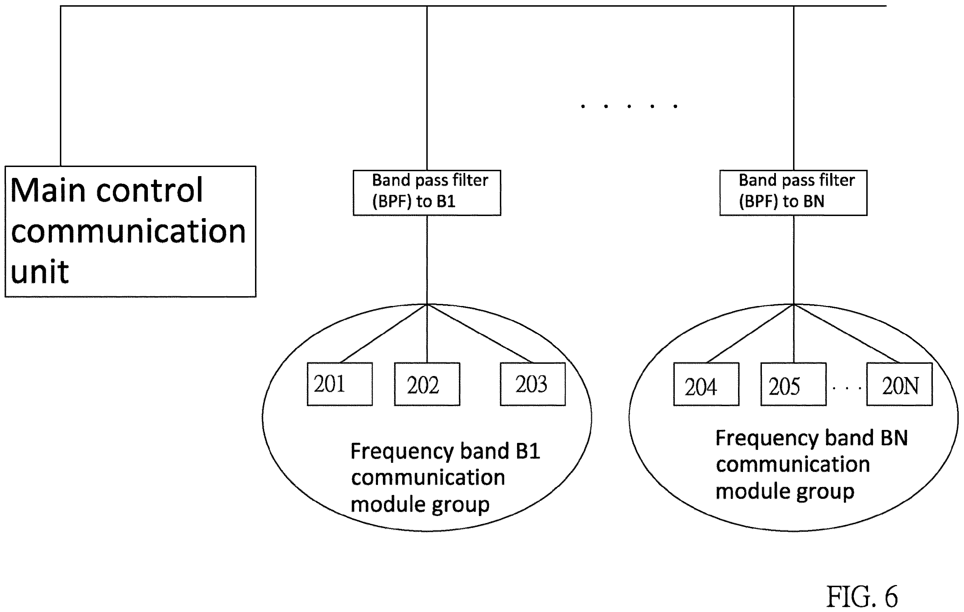

In the group using the same large frequency band, the communication units can directly communicate with one another through specific protocols. In the group using different large frequency bands, the communication units need to communicate with one another through units of transceivers concurrently having different frequency bands. For example, the graft communication is performed through the main control communication unit or other regional adapter boards on the vehicle, as shown in FIG. 6. FIG. 6 shows the configuration, which is similar to that of FIG. 4A, and is applicable to the "one-to-many" or "many-to-many" communication mode. The wired communication system is coupled to the main control communication unit through different band pass filters corresponding to different transmission frequency bands. The band pass filters can filter the signals, having different frequency bands, into the communication units of the communication unit groups. The wired communication system has multiple transmission module groups corresponding to different transmission frequency bands B1 to BN, wherein the communication units, which are not in the same transmission module group, cannot directly communicate with each other, and the transmission frequency bands are also different from each other. In one embodiment, the low-frequency frequency band (e.g., from 100 KHz to 2 MHz) serves as a large frequency band (combined frequency band), each of the communication units 201 to 203 using this frequency band has its own dedicated transmission frequency band, and the communication units 201 to 203 can directly transmit signals to one another and perform the real-time demodulation without the forwarding through the main control communication unit. All the signals of the communication units 201 to 203 using the large frequency band are coupled to the transmission line through the band pass filters (100 KHz to 2 MHz). In the other large frequency band (combined frequency band) ranging from 10 MHz to 100 MHz, the communication units 204 to 20N using the large frequency bands need to communicate with one another through the main control communication unit. The entrance coupler thereof is a band pass filter (10 MHz to 100 MHz) or a high-pass filter of 10 MHz. A guard band needs to be reserved between two large frequency bands to prevent mutual interference, and the main control communication unit has a transceiver (not shown) capable of transceiving multiple OFDM signals.

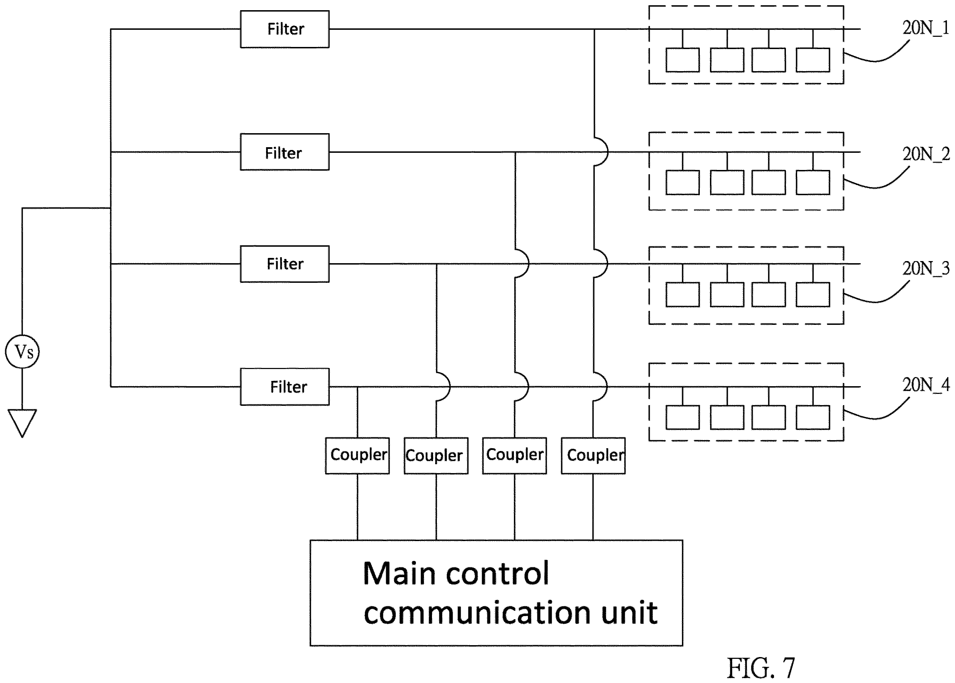

Referring to FIG. 7, in order to increase the bandwidth in some special applications, such as in-vehicle communication, a low-pass filter may be disposed between different sections of the power line, and then a main control communication unit is connected thereto. The communication between different sections of the power line needs the forwarding through the main control communication unit in a simplest manner that the main control communication unit is divided into left, right, up and down lines, wherein the principle thereof is the same as that of FIG. 4A, and the difference resides in that they are connected to the power Vs through the low-pass filters, and the main control communication unit has four sets of communication units 20N_1 to 20N_4 connected to each section of the power line.

## Claims

1. A wired communication system for replacing an in-vehicle CAN/LIN bus, the wired communication system having a power line or a transmission line coupled to multiple communication units, the wired communication system comprising:
a main control communication unit for performing a clock calibration on the communication units to complete synchronization, or performing a time delay or attenuation value calibration;
wherein in a first time domain, each of the communication units has a transmission frequency band which is dedicated, the transmission frequency bands of the communication units do not overlap with one another, and the transmission frequency bands of the communication units also do not overlap with a transmission frequency band or a transmission time of the main control communication unit; and all of the transmission frequency bands can be combined into a complete OFDM frequency band, and there is no guard band between the transmission frequency bands.

2. The wired communication system according to claim 1, wherein the main control communication unit and the communication units perform time synchronization, so that packets concurrently outputted from the communication units and the main control communication unit can be combined into a complete OFDM signal, and the communication units and the main control communication unit can concurrently perform receiving and demodulating; the main control communication unit keeps all of the communication units continuously performing clock synchronization, and the main control communication unit and the communication units concurrently output the packets with a same length, so that all signals are continuously kept at states that can be demodulated by each of the communication units and the main control communication unit.

3. The wired communication system according to claim 1, wherein the main control communication unit allocates the communication units, so that the communication units have the transmission frequency bands which are correspondingly dedicated; the main control communication unit can use the transmission frequency bands used by all of the communication units; the main control communication unit allocates the communication units with an uplink time for transmitting packets, and the main control communication unit allocates a downlink time for transmitting packets to the communication units; the main control communication unit adjusts transmitting terminals of all of the communication units in the wired communication system to perform time delay calibration, so that all the packets can be combined into a complete OFDM signal when the packets outputted from each of the communication units reach the main control communication unit.

4. The wired communication system according to claim 3, wherein after the main control communication unit has allocated the uplink time of the communication units corresponding to the transmission frequency bands, the communication units concurrently transmit the corresponding packets to the main control communication unit at the uplink time, the main control communication unit demodulates the packets, outputted from all of the communication units, into the complete OFDM signal, and the main control communication unit transmits the packets to the communication units at the downlink time.

5. The wired communication system according to claim 4, wherein when the main control communication unit transmits the packets, the communication units is in a receiving state; and when the communication units transmit the packets, the main control communication unit is in a receiving state.

6. The wired communication system according to claim 1, wherein the main control communication unit has a transceiver capable of transceiving multiple OFDM signals, the wired communication system is coupled to the main control communication unit through a band pass filter corresponding to the transmission frequency bands, which are different, wherein the communication units in the wired communication system cannot directly communicate with one another, but the communication units can concurrently communicate with the main control communication unit.

7. The wired communication system according to claim 2, wherein each of the communication units comprises:
two capacitors; and
two matching resistors functioning as impedance matching and being respectively serially connected to the capacitors;
wherein a line driver is disposed between a transmitting terminal of the communication unit and the matching resistors, and a low-noise amplifier (LNA) is disposed between a receiving terminal of the communication unit, the capacitors and the matching resistors.

8. The wired communication system according to claim 5, wherein each of the communication units comprises:
two capacitors; and
two matching resistors functioning as impedance matching and being respectively serially connected to the capacitors;
wherein a line driver is disposed between a transmitting terminal of the communication unit and the matching resistors, and a low-noise amplifier (LNA) is disposed between a receiving terminal of the communication unit, the capacitors and the matching resistors.

9. The wired communication system according to claim 2, wherein the wired communication system has a power energy wave and a network signal transmitted on the power line, and the wired communication system comprises:
a first low-pass filter, which is disposed at an entrance of a power consumption terminal of the wired communication system, separates the power line into the power consumption terminal and a transmission terminal, and filters the network signal, so that the power energy wave enters the power consumption terminal; and
a first coupler for generating a first coupling path, through which the network signal enters the transmission terminal via the first coupler without passing through the first low-pass filter;
wherein a power line impedance at a side of the transmission terminal is not affected by a side of the power consumption terminal.

10. The wired communication system according to claim 5, wherein the wired communication system has a power energy wave and a network signal transmitted on the power line, and the wired communication system comprises:
a first low-pass filter, which is disposed at an entrance of a power consumption terminal of the wired communication system, separates the power line into the power consumption terminal and a transmission terminal, and filters the network signal, so that the power energy wave enters the power consumption terminal; and
a first coupler for generating a first coupling path, through which the network signal enters the transmission terminal via the first coupler without passing through the first low-pass filter;
wherein a power line impedance at a side of the transmission terminal is not affected by a side of the power consumption terminal.

11. The wired communication system according to claim 3, wherein the main control communication unit adjusts transmission energies of the communication units, so that signal energy levels in all of the transmission frequency bands are substantially the same.

12. The wired communication system according to claim 1, wherein the communication units use a same one of the transmission frequency bands, but the communication units need to use the same one of the transmission frequency bands in a time-division manner.

13. The wired communication system according to claim 1, wherein the communication units on the power line use the same one of the transmission frequency bands, but different ones of the communication units using the same one of the transmission frequency bands only can transmit signals in specific time periods.

14. The wired communication system according to claim 1, wherein in a second time domain, in addition to the main control communication unit on the power line, at least one of the communication units uses all of the transmission frequency bands.

15. The wired communication system according to claim 14, wherein the wired communication system connects multiple high-speed communication units of the communication units to multiple low-speed communication units of the communication units; wherein OFDM modulation and demodulation abilities of the low-speed communication units are downgraded.

16. The wired communication system according to claim 15, wherein in each of signal cycles, packet times of the low-speed communication units are interspersed in packet times alternately used by the main control communication unit and the high-speed communication units.

17. The wired communication system according to claim 16, wherein each of the low-speed communication units is specified to use continuous sub-carriers that are not repeated.

18. The wired communication system according to claim 2, wherein the wired communication system has a power energy wave and a network signal transmitted on the power line, and the wired communication system comprises:
an active isolator, which is disposed at an entrance of a power consumption terminal of the wired communication system, separates the power line into the power consumption terminal and a transmission terminal, and filters the network signal, so that the power energy wave enters the power consumption terminal; and
a first coupler for generating a first coupling path, through which the network signal enters the transmission terminal via the first coupler without passing through the active isolator;
wherein a power line impedance at a side of the transmission terminal is not affected by a side of the power consumption terminal.

19. The wired communication system according to claim 18, wherein the active isolator comprises:
two transformers respectively serially connected to the power line;
two amplifiers respectively coupled to a starting terminal of a primary-side coil and a starting terminal of a secondary-side coil of a first transformer of the transformers, wherein output terminals of the amplifiers are respectively coupled between inverting input terminals of the amplifiers and the two transformers; noninverting input terminals of the amplifiers are respectively coupled to the starting terminal of the primary-side coil and the starting terminal of the secondary-side coil of the first transformer;
multiple capacitors respectively parallelly connected between the starting terminal of the primary-side coil and the starting terminal of the secondary-side coil of the first transformer, the noninverting input terminals of the amplifiers and the power line, and between an ending terminal of the primary-side coil and an ending terminal of the secondary-side coil of the first transformer, the inverting input terminals and the output terminals of the amplifiers, and the power line; wherein the power line at a high-voltage side is parallelly connected to another one of the capacitors.

20. The wired communication system according to claim 5, wherein the wired communication system has a power energy wave and a network signal transmitted on the power line, and the wired communication system comprises:
an active isolator, which is disposed at an entrance of a power consumption terminal of the wired communication system, separates the power line into the power consumption terminal and a transmission terminal, and filters the network signal, so that the power energy wave enters the power consumption terminal; and
a first coupler for generating a first coupling path, through which the network signal enters the transmission terminal via the first coupler without passing through the active isolator;
wherein a power line impedance at a side of the transmission terminal is not affected by a side of the power consumption terminal.

21. The wired communication system according to claim 20, wherein the active isolator comprises:
two transformers respectively serially connected to the power line; and
two amplifiers respectively coupled to a starting terminal of a primary-side coil and a starting terminal of a secondary-side coil of a first transformer of the transformers, wherein output terminals of the amplifiers are respectively coupled between inverting input terminals of the amplifiers, and the two transformers; noninverting input terminals of the amplifiers are respectively coupled to the starting terminal of the primary-side coil and the starting terminal of the secondary-side coil of the first transformer;
multiple capacitors respectively parallelly connected between the starting terminal of the primary-side coil and the starting terminal of the secondary-side coil of the first transformer, the noninverting input terminals of the amplifiers and the power line, and between an ending terminal of the primary-side coil and an ending terminal of the secondary-side coil of the first transformer, the inverting input terminals and the output terminals of the amplifiers, and the power line;
wherein the power line at a high-voltage side is parallelly connected to another one of the capacitors.
